# EUROPEAN PATENT SPECIFICATION

(11) **EP 3 631 329 B1**
(45) Date of publication and mention of the grant of the patent: **16.11.2022**
(21) Application number: 18731906.6
(22) Date of filing: 29.05.2018
(51) Int. Cl.: F27B 1/00, B01D 53/86, B01D 53/56, B01D 53/30, F23J 15/00, F27D 17/00

(54) **PLANT FOR THE ABATEMENT OF NITROGEN OXIDES AND THEIR MIXTURES PRESENT IN THE FUMES OF PARALLEL FLOW REGENERATIVE LIME KILNS**
ANLAGE ZUR BESEITIGUNG VON STICKOXIDEN UND DEREN GEMISCHEN IN DEN ABGASEN VON REGENERATIVEN PARALLELFLUSS-KALKÖFEN
INSTALLATION POUR LA RÉDUCTION D'OXYDES D'AZOTE ET DE LEURS MÉLANGES PRÉSENTS DANS LES FUMÉES DE FOURS À CHAUX RÉGÉNÉRATIVE À FLUX PARALLÈLE

(30) Priority: 31.05.2017 IT 201700059650
(43) Date of publication of application: 08.04.2020
(73) Proprietor: Cimprogetti S.r.l., 24044 Dalmine (BG) (IT)
(72) Inventor: RIZZI, Pierluigi, 24128 Bergamo (IT); SARANDREA, Luca, 00195 Roma (IT); COLOMBARI, Valerio, 24044 Dalmine (BG) (IT)
(74) Representative: Gatti, Enrico
(86) International application number: PCT/IB2018/053796
(87) International publication number: WO 2018/220520

(56) References cited:
- WO-A1-2010/023105
- WO-A1-2014/090427
- DE-A1-102013 016 701
- US-A1- 2011 005 438

## Description

The present invention relates to a plant for the abatement of nitrogen oxides (NOx) and their mixtures present in the fumes of parallel-flow regenerative lime kilns, and more in particular to a parallel-flow regenerative lime kiln with a plant for the abatement of nitrogen oxides and their mixtures present in the outlet fumes.

The characteristic of parallel-flow regenerative lime kilns is that of being made up of two interconnected cylindrical shafts, which work in alternation, as described in WO 2014/090427 A1.

Moreover known is the danger of nitrogen oxides, and for this reason it is sought to reduce their presence in the fumes of kilns, as described in DE 10 2013 016701 A1.

The aim of the present invention is to provide a plant for the abatement of nitrogen oxides and their mixtures present in the fumes of parallel-flow regenerative lime kilns that will be efficient.

A further aim is to provide a plant that is simple to build. According with the present invention, the above aims and others still are achieved by a parallel-flow regenerative lime kiln as claimed in independent claim1.

Further characteristics of the invention are described in the dependent claims.

The advantages of the present solution as compared to the solutions of the prior art are multiple.

The principle proposed for the abatement of NOx, unlike the known SNCR (Selective Non-catalytic Reduction) and SCR (Selective Catalytic Reaction) principles, represents a hybrid solution in which catalytic materials and an ammonia-based reagent, which activates the reaction on the catalytic material, are used.

The present solution may be applied not only to new kilns but also to plants already built.

The process of production of lime is not at all altered.

The NOx-abatement plant modulates its own parameters without conditioning in the least the calcination process in progress within the kiln.

There is a competitive advantage for the market that opens to the new contexts of environmental sustainability.

A considerable reduction of nitrogen oxides, which may on average even exceed 65%, is obtained by intervening on the temperature of the fumes and on injection of the ammonia solution, and at the same time the ammonia slip values are maintained within the limits envisaged by environmental standards.

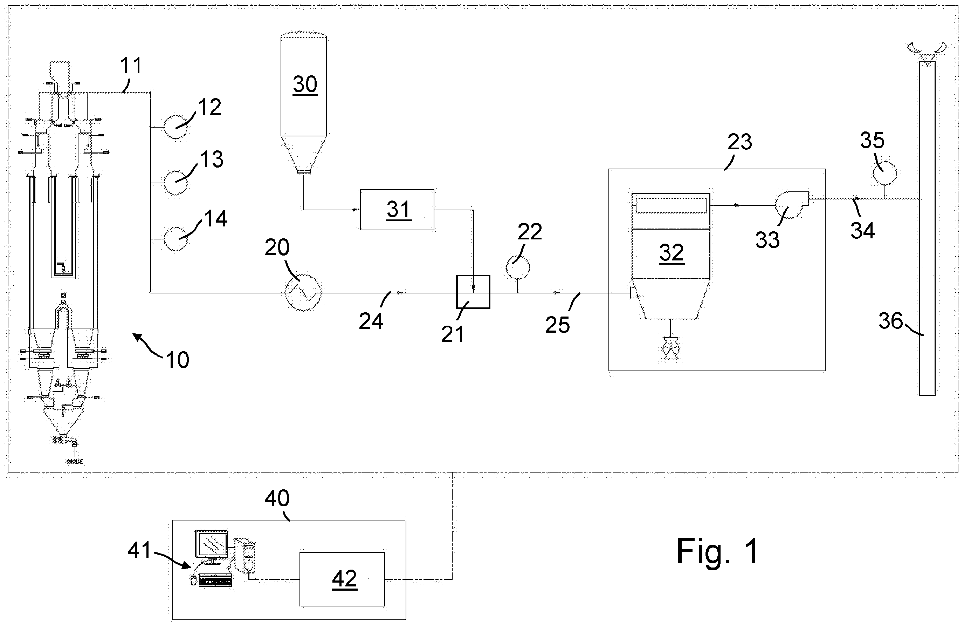

The characteristics and advantages of the present invention will emerge clearly from the ensuing detailed description of a practical embodiment thereof, illustrated by way of non-limiting example in the annexed plate of drawings, wherein Figure 1 is a schematic illustration of a parallel-flow regenerative lime kiln with a plant for the abatement of nitrogen oxides (NOx) and their mixtures present in the outlet fumes, according to the present invention.

With reference to the attached figure, the plant comprises, according to the present invention, a parallel-flow regenerative lime kiln 10, departing from the top of which is a ducting 11, which collects the combustion fumes coming from the two shafts.

Located at the outlet of the kiln 10, on the ducting 11 are: a thermometer 12; a flowmeter 13 for measuring the flow rate of the fumes; and a pollutant meter 14, which is, in particular, able to measure the concentration of NOx, VOCs, O₂, and NH₃.

Set downstream is then a heater 20 for heating the flowing fumes, preferably of the gaseous-fuel type.

Next, present on the ducting 24 at outlet from the heater 20 are a mixer/injector 21 for mixing/injecting an ammonia solution, and a thermometer 22. The injector 21 is, for example, of the spray type.

The fumes and the ammonia solution reach a filter 23 by means of a ducting 25.

The plant comprises a tank 30 for containing the ammonia solution. Said tank, according to the logistic requirements, may have a pre-set volume selected by the user.

The tank 30 is followed by a (computer-controlled) system 31 for dispensing the solution, which connects to the mixer/injector 21.

The filter 23 comprises a bag filter 32 followed by a fan 33 for extracting the fumes passing through the filter 32 and supplies the fumes cleansed of a fair part of the pollutants, to a ducting 34.

Located on this ducting 34, downstream of the filter 23, is a pollutant meter 35, which is, in particular, able to measure the concentration of NOx, O₂, and NH₃.

Then the fumes are sent to a stack 36.

A computer system 40 including a computer 41 and an electronic interface 42 is able to read the data from the sensors, process the information received, and control the devices within the plant.

The computer system 40 for managing the NOx-abatement plant is perfectly integrated with the software for managing the kiln so as to receive any information regarding the behaviour of the kiln that might cause and do cause consequences on the NOx-abatement process, including alarms and stoppages of the kiln. The computer system 40 receives the measurements made by the thermometer 12, the fume flowmeter 13, the pollutant meter 14, the thermometer 22, and the pollutant meter 35.

On the basis of the above measurements, the computer system regulates the temperature of the fumes by means of the heater 20 and the amount of introduction of ammonia solution by means of the dispensing system 31.

The foregoing is ensured by keeping under control the flow rate 13 of the fumes and the measurements regarding the pollutants, which are made upstream of the plant with the pollutant meter 14 and downstream of the plant with the pollutant meter 35.

Moreover, in order to guarantee an adequate temporal response to the cyclic variations of the parameters that affect the NOx-abatement process, the management software is of a predictive type.

In particular, it analyses the historic data coming from the previous calcination cycles and plots the expected curves of the individual parameters so as to predict the behaviour of the plant, thus reducing the response delay.

The expected curve is then compared instantaneously with the values measured by the various components of the plant and further refined for reducing and maximising the efficiency of the NOx-abatement plant and for minimising the residual emissions at outlet from the catalytic filter.

In a parallel-flow regenerative lime kiln that for its calcination process cyclically alternates combustion in the two shafts, the fumes at outlet from the kiln are found not to be uniform and constant in time but present a cyclic pattern that reproduces the alternating process of combustion in the two shafts.

In fact, the temperature of the fumes at exit from the kiln present a variability during the operating cycle of between 80°C to 150°C. Moreover, at output from the kiln other characteristic parameters manifest a cyclic nature. For example, the flow rate of the fumes, which is different between the combustion period and the time of switching between the shafts.

Also the concentration of the components that constitute the mixture of the spent fumes at outlet from the kiln, amongst which also the concentrations of NOx, NH₃, and O₂, vary according to the operating cycles of the regenerative kiln.

To overcome the cyclic nature of the temperatures, the heater 20 is used to keep a temperature practically constant and higher than a pre-set temperature, namely, higher than 150°C, and in particular higher than 180 °C.

The heater for heating the fumes enters into action only when the temperature of the fumes, measured with the thermometer 12, is too low, i.e., lower than the values appearing above, for example when the temperature is lower than 150°C. The fume heater 20 modulates the thermal power delivered as a function of the temperature during the cycle so as to contain the levels of consumption of fuel used by the heater itself and guarantee the minimum operating temperature for NOx abatement.

Introduction of the ammonia solution is modulated and monitored by the software for management of the plant so that at least the minimum flow rate necessary for the NOx-abatement process is supplied, namely, without exceeding a flow rate lower than 3 l/h, and preferably lower than 5 l/h, thus containing the levels of consumption of NH₃ and guaranteeing a minimum residue in the fumes at outlet from the catalytic filter, in compliance with the standards that regulate the emissions thereof into the atmosphere. The filter 32 is a bag filter, installed within which are catalytic bags, i.e., tubular elements that, in the case in point, comprise an outer layer and an inner layer that are coaxial.

The outer layer is constituted by traditional filtering fabric, for example made of aramid fibres, appropriately selected as a function of the fuel introduced into the kiln, for capturing the particulate matter contained in the fumes. The inner layer is, instead, constituted by a catalytic fabric preferably with a base of vanadium oxide (V₂O₅).

The dirty gas containing particulate matter is initially cleaned by the outer layer formed by a highly efficient membrane filter. The cleansed gas then passes where the catalytic material is located. When the mixture of hot gas and ammonia passes through the inner catalytic bag with a pre-set surface speed, the selective catalytic reaction (SCR) takes place to convert NOx into nitrogen gas and water vapour. The gases thus cleansed exit from the filter.

The tests conducted on an industrial pilot plant have led to the conclusions provided below.

It is necessary to use an amount of ammonia solution lower than 5 l/h in order to increase the efficiency of the vanadium-oxide catalyst, and the fumes must be kept at a temperature higher than 180°C to increase to denitrification efficiency up to 65%.

By drawing up a balance of ammonia, it was found that 65% of NOx had been abated.

In this case, the plant presented a stoichiometric ratio between NH₃ and reacted NOx that was on average 1.3 with an ammonia residue at the stack lower than 1 mg/Nm³.

Check on the residual ammonia is fundamental for proper denitrification efficiency.

## Claims

1. A parallel-flow regenerative lime kiln with a plant for the abatement of nitrogen oxides and their mixtures present in the outlet fumes, comprising: a first ducting (11), which collects the combustion fumes coming from the outlet of the two shafts of said kiln (10); said plant being **characterized in that** it comprises: a heater (20) for heating the fumes flowing in said ducting (11) and supplying heated fumes to a second ducting (24); an injector (21) for injecting an ammonia solution in said second ducting (24), which is mixed with the flowing fumes; a third ducting (25), exiting from said injector (21), which carries said ammonia solution and said flowing fumes to a filter (32), said filter (32) being a catalytic filter; and a fourth ducting (34), downstream of said filter (32), which carries the residual fumes to a stack (36); said heater (20) is configured for heating the fumes to a temperature higher than 150°C; said injector (21) is configured for injecting into said second ducting (24) an amount of ammonia solution lower than 5 l/h; and said catalytic filter (32) comprising a vanadium-oxide-based catalytic fabric; said plant comprises a computer system (40), which receives the measurements made by a thermometer (12), a flowmeter (13) for measuring the flow rate of the fumes, a pollutant meter (14), placed at the outlet of the kiln (10), a thermometer (22) placed at outlet from the heater (20), and a pollutant meter (35) placed downstream of the filter (32); said computer system (40), on the basis of the measurements supplied by said measuring instruments, regulating the temperature of the fumes by means of said heater (20) and the amount of ammonia solution introduced via the dispensing system (31).

2. The kiln according to Claim 1, **characterized in that** set downstream of said filter (32) and upstream of said stack (36) is a fan (33) for extraction of the fumes passing through the filter (32).

3. The kiln according to any one of the preceding claims, **characterized in that** said plant comprises a tank (30) for containing said ammonia solution followed by a system (31) for dispensing said ammonia solution, which connects up to said injector (21).

4. The kiln according to any one of the preceding claims, **characterized in that** said heater (20) is configured to heat the fumes to a temperature higher than 180°C.

5. The kiln according to any one of the preceding claims, **characterized in that** said heater (20) is configured to heat the fumes when the temperature is lower than 150°C.

6. The kiln according to any one of the preceding claims, **characterized in that** said injector (21) is configured to inject into said second ducting (24) an amount of ammonia solution of less than 3 l/h.

7. The kiln according to any one of the preceding claims, **characterized in that** said plant comprises means for measuring the characteristic parameters of said fumes.

8. The kiln according to the preceding claim, **characterized in that** said plant comprises a computer system (40), which receives the values measured by said measurement means, processes the information received, and controls the devices of said plant.

9. The kiln according to the preceding claim, **characterized in that** said plant analyses the values measured by said measurement means regarding the previous calcination cycles and plots the expected curves of the individual parameters so as to predict the behaviour of the plant, thus reducing the response delay.

10. The kiln according to any one of the preceding claims, **characterized in that** said catalytic filter (32) is a bag filter and comprises an inner layer formed by a vanadium-oxide-based catalytic fabric and an outer layer formed by a filtering fabric.

## Patentansprüche

1. Ein regenerativer Gleichstrom-Kalkofen mit einer Anlage für die Reduzierung von Stickoxiden und deren Mischungen, welche im Austrittsrauch enthalten sind, der Folgendes umfasst: eine erste Leitung (11), die den Verbrennungsrauch, der von dem Auslass der beiden Schächte des genannten Kalkofens (10) stammt, auffängt; wobei die genannte Anlage **dadurch gekennzeichnet** wird, dass sie jeweils Folgendes umfasst: eine Heizung (20) zum Erhitzen des durch die genannte Leitung (11) strömenden Rauchs und Lieferung des erhitzten Rauchs an eine zweite Leitung (24); einen Injektor (21) zum Einspritzen einer Ammoniaklösung in die genannte zweite Leitung (24), welche jeweils mit den Rauchströmen gemischt wird; eine dritte Leitung (25), die von dem genannten Injektor (21) ausgeht, welche die genannte Ammoniaklösung und den genannten Rauchstrom zu einem Filter (32) transportiert, wobei der genannte Filter (32) ein katalytischer Filter ist; sowie eine vierte Leitung (34) stromabwärts in Bezug auf den genannten Filter (32), die den Restrauch zu einem entsprechenden Schornstein (36) leitet; wobei die genannte Heizung (20) für die Erhitzung des Rauchs auf eine Temperatur von über 150 °C konfiguriert ist; und der genannte Injektor (21) für die Einspritzung in die genannte zweite Leitung (24) einer Menge an Ammoniaklösung konfiguriert ist, welche niedriger als 5 l/h ist; und der genannte katalytische Filter (32) ein katalytisches Gewebe auf Vanadiumoxidbasis umfasst; wobei die genannte Anlage ein Computersystem (40) umfasst, das die mit einem Thermometer (12) ermittelten Messungen empfängt, einen Durchflussmengenmesser (13) zur Messung der Durchflussmenge des Rauchs, einen Schadstoffmesser (14), welcher sich am Auslass des Kalkofens (10) befindet, ein Thermometer (22), das sich am Auslass der Heizung (20) befindet, und einen Schadstoffmesser (35), welcher sich stromabwärts von Filter (32) befindet; wobei das genannte Computersystem (40) bei Berücksichtigung der von den genannten Messgeräten gelieferten Messungen die Temperatur des Rauchs mit Hilfe der genannten Heizung (20) sowie die Menge an Ammoniaklösung regelt, welche jeweils über das entsprechende Dosiersystem (31) eingespeist wird.

2. Der Kalkofen gemäß Anspruch 1, **dadurch gekennzeichnet, dass** sich stromabwärts von dem genannten Filter (32) und stromaufwärts von dem genannten Schornstein (36) ein Ventilator (33) zur Absaugung des durch den Filter (32) strömenden Rauchs befindet.

3. Der Kalkofen gemäß einem beliebigen der vorausgegangenen Ansprüche, **dadurch gekennzeichnet, dass** die genannte Anlage einen Behälter (30) zum Enthalten der genannten Ammoniaklösung umfasst, auf den ein System (31) zur Verteilung der genannten Ammoniaklösung folgt, welches jeweils an den genannten Injektor (21) angeschlossen wird.

4. Der Kalkofen gemäß einem beliebigen der vorausgegangenen Ansprüche, **dadurch gekennzeichnet, dass** die genannte Heizung (20) konfiguriert ist, um den Rauch auf eine Temperatur über 180 ° zu erhitzen.

5. Der Kalkofen gemäß einem beliebigen der vorausgegangenen Ansprüche, **dadurch gekennzeichnet, dass** die genannte Heizung (20) konfiguriert ist, um den Rauch zu erhitzen, wenn die Temperatur unter 150 ° liegt.

6. Der Kalkofen gemäß einem beliebigen der vorausgegangenen Ansprüche, **dadurch gekennzeichnet, dass** der genannte Injektor (21) konfiguriert ist, um eine Menge an Ammoniaklösung in die genannte zweite Leitung (24) einzuspritzen, die unter 3 l/h liegt.

7. Der Kalkofen gemäß einem beliebigen der vorausgegangenen Ansprüche, **dadurch gekennzeichnet, dass** die genannte Anlage jeweils Elemente zur Messung der charakteristischen Parameter des genannten Rauchs umfasst.

8. Der Kalkofen gemäß dem vorausgegangenen Anspruch, **dadurch gekennzeichnet, dass** die genannte Anlage jeweils ein Computersystem (40) umfasst, das die Werte empfängt, die mit den genannten Messelementen ermittelt werden, die empfangene Information dann jeweils verarbeitet und die Geräte der genannten Anlage steuert.

9. Der Kalkofen gemäß dem vorausgegangenen Anspruch, **dadurch gekennzeichnet, dass** die genannte Anlage die durch die genannten Messelemente ermittelten Werte analysiert, welche die vorherigen Calzinierungszyklen betreffen, und die erwarteten Kurven der einzelnen Parameter aufzeichnet, so dass das Verhalten der Anlage vorausgesehen werden kann, um auf diese Weise die Reaktionsverzögerung zu verringern.

10. Der Kalkofen gemäß einem beliebigen der vorausgegangenen Ansprüche, **dadurch gekennzeichnet, dass** der genannte katalytische Filter (32) ein Schlauchfilter ist und jeweils eine innere Schicht umfasst, welche durch ein katalytisches Gewebe auf Vanadiumoxidbasis und durch eine äußere Schicht gebildet wird, die aus einem Filtergewebe besteht.

## Revendications

1. Four à chaux régénératif à flux parallèle avec une installation pour la réduction des oxydes d'azote et de leurs mélanges présents dans les fumées de sortie, comprenant: un premier conduit (11), qui collecte les fumées de combustion provenant de la sortie des deux arbres dudit four (10); ladite installation étant **caractérisée en ce qu'**elle comprend: un chauffage (20) pour chauffer les fumées s'écoulant dans ledit conduit (11) et fournir des fumées chauffées à un deuxième conduit (24); un injecteur (21) pour injecter une solution d'ammoniac dans ledit deuxième conduit (24), qui est mélangée aux fumées s'écoulant; un troisième conduit (25), sortant dudit injecteur (21), qui transporte ladite solution d'ammoniac et lesdites fumées s'écoulant vers un filtre (32), ledit filtre (32) étant un filtre catalytique; et un quatrième conduit (34), en aval dudit filtre (32), qui transporte les fumées résiduelles vers une pile (36); ledit chauffage (20) est configuré pour chauffer les fumées à une température supérieure à 150°C; ledit injecteur (21) est configuré pour injecter dans ledit deuxième conduit (24) une quantité de solution d'ammoniac inférieure à 5 I/h; et ledit filtre catalytique (32) comprenant un tissu catalytique à base d'oxyde de vanadium; ladite installation comprend un système informatique (40), qui reçoit les mesures effectuées par un thermomètre (12), un débitmètre (13) pour mesurer le débit des fumées, un compteur de polluants (14), placé à la sortie du four (10), un thermomètre (22) placé à la sortie du chauffage (20), et un compteur de polluants (35) placé en aval du filtre (32); ledit système informatique (40), sur la base des mesures fournies par lesdits instruments de mesure, régulant la température des fumées au moyen dudit chauffage (20) et la quantité de solution d'ammoniac introduite via le système de distribution (31) .

2. Four selon la revendication 1, **caractérisé en ce qu'**en aval dudit filtre (32) et en amont de ladite pile (36) se trouve un ventilateur (33) pour l'extraction des fumées traversant le filtre (32).

3. Four selon l'une quelconque des revendications précédentes, **caractérisé en ce que** ladite installation comprend un réservoir (30) pour contenir ladite solution d'ammoniac suivi d'un système (31) pour distribuer ladite solution d'ammoniac, qui se connecte audit injecteur (21).

4. Four selon l'une quelconque des revendications précédentes, **caractérisé en ce que** ledit chauffage (20) est configuré pour chauffer les fumées à une température supérieure à 180°C.

5. Four selon l'une quelconque des revendications précédentes, **caractérisé en ce que** ledit chauffage (20) est configuré pour chauffer les fumées lorsque la température est inférieure à 150°C.

6. Four selon l'une quelconque des revendications précédentes, **caractérisé en ce que** ledit injecteur (21) est configuré pour injecter dans ledit deuxième conduit (24) une quantité de solution d'ammoniac inférieure à 3 l/h.

7. Four selon l'une quelconque des revendications précédentes, **caractérisé en ce que** ladite installation comprend des moyens pour mesurer les paramètres caractéristiques desdites fumées.

8. Four selon la revendication précédente, **caractérisé en ce que** ladite installation comprend un système informatique (40), qui reçoit les valeurs mesurées par lesdits moyens de mesure, traite les informations reçues, et commande les dispositifs de ladite installation.

9. Four selon la revendication précédente, **caractérisé en ce que** ladite installation analyse les valeurs mesurées par lesdits moyens de mesure concernant les cycles de calcination précédents et trace les courbes attendues des paramètres individuels de manière à prédire le comportement de l'installation, réduisant ainsi le délai de réponse.

10. Four selon l'une quelconque des revendications précédentes, **caractérisé en ce que** ledit filtre catalytique (32) est un filtre à manches et comprend une couche interne formée par un tissu catalytique à base d'oxyde de vanadium et une couche externe formée par un tissu filtrant.
